(19) Europäisches Patentamt

European Patent Office

Office européen des brevets

(11) **EP 3 739 515 B1**

(12) **EUROPEAN PATENT SPECIFICATION**

(45) Date of publication and mention
of the grant of the patent:
**01.05.2024 Bulletin 2024/18**

(21) Application number: **19174965.4**

(22) Date of filing: **16.05.2019**

(51) International Patent Classification (IPC):
**G06V 10/82** *(2022.01)* **G06F 18/2433** *(2023.01)*

(52) Cooperative Patent Classification (CPC):
**G06F 18/2433;** G06F 18/2413; G06V 10/513;
G06V 10/82

(54) **DETERMINING A PERTURBATION MASK FOR A CLASSIFICATION MODEL**

BESTIMMEN EINER STÖRMASKE FÜR EIN KLASSIFIZIERUNGSMODELL

DÉTERMINATION D'UN MASQUE DE PERTURBATION POUR UN MODÈLE DE CLASSIFICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**18.11.2020 Bulletin 2020/47**

(73) Proprietor: **Robert Bosch GmbH
70442 Stuttgart (DE)**

(72) Inventor: **Munoz Delgado, Andres Mauricio
71263 Weil Der Stadt (DE)**

(56) References cited:
**WO-A1-2018/170401 WO-A1-2018/192672
WO-A1-2019/067960**

• **RUTH FONG ET AL: "Interpretable Explanations
of Black Boxes by Meaningful Perturbation",
ARXIV.ORG, CORNELL UNIVERSITY LIBRARY,
201 OLIN LIBRARY CORNELL UNIVERSITY
ITHACA, NY 14853, 11 April 2017 (2017-04-11),
XP081305661, DOI: 10.1109/ICCV.2017.371**
• **Karen Simonyan ET AL: "Deep Inside
Convolutional Networks: Visualising Image
Classification Models and Saliency Maps", , 20
December 2013 (2013-12-20), XP055226059,
Retrieved from the Internet:
URL:http://arxiv.org/pdf/1312.6034v2.pdf
[retrieved on 2015-11-05]**

**Description**

**FIELD OF THE INVENTION**

The invention relates to a system for determining masks for classifications by a classification model, e.g. to obtain an understanding of whether the classification model has learned an input/output relationship. The invention also relates to a corresponding computer-implemented method. The invention further relates to a computer-readable medium comprising instructions to perform the method.

**BACKGROUND OF THE INVENTION**

Classification models are more and more being used in settings such as automated control systems. For example, control systems of autonomous vehicles may use image classification to detect objects in their vicinity, such as traffic signs and obstacles, and use this detection to control the vehicle. However, also non-autonomous vehicles nowadays have driver-assistance systems that use image classification, for example, to brake if the vehicle is in danger of colliding with an object. Image classification is used in various other critical contexts as well, such as medical image classification. Apart from images, also other types of sensor data may be used as input to classification models, e.g., audio data, video data, radar data, LiDAR data, ultrasonic data, or various individual sensor readings or their histories.

Based on classifications, control signals may be generated, e.g., to control robots, vehicles, domestic appliances, power tools, manufacturing machines, personal assistants, access control systems, etcetera. However, classification also occurs in various other contexts such as medical image analysis. Various types of classification models are known, for example, neural networks, deep neural networks, support vectors machines, etcetera. Classification models are sometimes also called discriminative models.

To ensure robustness and reliability of classification models, it is important to establish a degree to which a classification model has learned a desired input-output relationship. This is especially the case for more complex models such as neural networks, which may be regarded as black boxes that provide a classification but by themselves provide little insight into how that classification is obtained. For example, such models may be trained on limited, and thus inherently biased, datasets, resulting in models that are over-parametrized in comparison to the amount of data available. As a consequence, such models may seem to work well in testing, but may provide poor results in deployment. For example, an image classifier for a vehicle that is trained on data for good weather conditions may not generalize well to bad weather conditions.

Moreover, it is known that various state-of-the-art machine learning models, e.g., neural networks, can be tricked into providing false, high-confidence predictions, with potentially dangerous results. For examples, it may be possible to determine modifications to an image that are hard to see with the naked eye but nonetheless cause an image classifier to change its mind from making a high-confidence classification into one class, e.g., a colliding object, to a high-confidence classification into another class, e.g., no danger. Also in this case, the true generalization performance of the classification model may be questioned.

To obtain an understanding of whether a classification model has learned an input/output relationship, it is known to use perturbation masks. For example, in R. Fong and A. Vedaldi, "Interpretable explanations of black boxes by meaningful perturbation" (available at https://arxiv.org/abs/1704.03296) a framework is proposed that, given in image, determines a mask which is the same size as the image and which highlights parts of the image most responsible for classifier decision.

WO 2019/067960 A1 describes various systems and methods for improving the aggressive development of machine learning systems. In machine learning, there is always a trade-off between allowing a machine learning system to learn as much as it can from training data and overfitting on the training data. This trade-off is important because overfitting usually causes performance on new data to be worse. However, various systems and methods can be utilized to separate the process of detailed learning and knowledge acquisition and the process of imposing restrictions and smoothing estimates, thereby allowing machine learning systems to aggressively learn from training data, while mitigating the effects of overfitting on the training data.

**SUMMARY OF THE INVENTION**

Various embodiments aim to determine a mask indicating perturbations that disturb a classification of an input instance by a classification model. It may be advantageous to identify perturbations that are critical in the sense that they disturb the classification, e.g., change an image classification from "traffic sign" to "billboard" or decrease certainty of a classification as "traffic sign". It may also be beneficial to identify perturbations that are minimal, in the sense that the changes aim to preserve the input instance as well as possible.

It can moreover be advantageous to determine perturbations that are intuitive, e.g., to contain semantic meaning instead of highlighting artefacts of the classification model that result in a particular classification. For example, given a classifier trained to distinguish between images of cats and dogs, it may be useful if a mask can highlight how changing the appearance or presence of a dog's snout, tail, or nose decreases the model's output score for the dog class, and/or, when replacing each with a cat's counterparts, increases the score of the cat class. It is noted that determining masks such that they correspond to meaningful changes preferably excludes adversarially generated masks, e.g., small, localized changes designed to be hard to recognize but still cause the classification model to change its classification.

In other words, it may be beneficial for masks to provide meaningful counterfactuals for a given classification model, or put in another way, to provide controlled and semantic perturbations that change the model's opinion about the input instance. Such perturbations may be put to various uses, as shown in various examples below. The perturbations and/or perturbed input instances are useful outputs in and of themselves, e.g., for presenting to a model developer as a way of debugging the classification model, or to an end user for gauging whether the model looked at the right aspects of the input instance. Perturbations as described herein may retain their interpretability and allow an end user to better understand a decision boundary of the model, e.g., a sensibility of the classification model to changes in its input, which is important when performing model verification/validation. The perturbations and/or input instances may also be further used, for instance, in a control system using the image classifications. For example, the perturbations and/or input instances may be used to quantify model sensibilities in order to obtain a validation metric, to perform further classifications, etcetera.

In accordance with a first aspect of the invention, a system for determining a mask is proposed as defined by claim 1. In accordance with a further aspect of the invention, a method of determining a mask is proposed as defined by claim 14. In accordance with a further aspect of the invention, a computer-readable medium is provided as defined by claim 15.

Various embodiments relate to determining a mask indicating perturbations that disturb a classification of an input instance, for example, an input image, by the classification model. The perturbed input instance may thus be seen as a counterfactual for the classification model. Disturbing the classification may comprise causing the classification model to classify the input instance differently, or at least causing a significant drop in classification score. For example, a traffic sign may be perturbed into an advertisement billboard. Disturbing the classification may also comprise moving the input instance to, or at least close to, a decision boundary of the classification model, e.g., an area of the input space where the classification model cannot be relied to make correct classifications. For example, a traffic sign in an image may turn into a billboard that still has characteristics of the traffic sign, e.g., a red border and a white background. A mask indicating perturbations is referred to throughout this specification as a perturbation mask. By indicating perturbations that disturb the classification, the mask may provide an explanation of why the classification model classified the input instance in a certain way.

Interestingly, the inventor realized that, instead of determining a mask that directly masks the input instance, instead a mask may be determined that indicates perturbations to a latent space representation of the input instance for a generative model.

The generative model is configured to generate synthetic input instances to the classification model. In other words, the generative model may be configured for generating synthetic instances of the input type of the classification model from latent space representations. Various generative models, and ways of training them in such a way that they can generate representative synthetic instances, are known in the art. For example, the generative model may comprise a decoder part of a variational autoencoder (VAE). Such a VAE typically comprises an encoder part and a decoder part. The encoder part may generate latent space representations from instances of a given type. The decoder part may generate synthetic instances of the type from latent space representations, e.g., feature vectors of the same length. The VAE may be trained to maximize a likelihood of the decoder part reconstructing an input instance from its latent space representation. However, various other types of generative models, e.g., generative adversarial networks (GANs), flow models or autoregressive models can also be used.

Generally, the generative model may be trained such that the generative model generates input instances that are representative of input instances of the classification model from latent representations from the latent space. For example, input instances can generally be approximated by latent space representations. The generative model is separate from the classification model, although both are typically trained on the same or similar datasets. For example, the generative model may be trained to best generate representative input instances of that training dataset. The generative model can then be used together with the classification model to diagnose its behaviour.

The latent space representations come from a latent space and typically have smaller dimensions than the input instances they generate, for example, having at most 1 % or at most 0,1 % of the number of features of input instances. Hence, a latent space representation that approximates an input instance may effectively be regarded as a compressed representation of that input instances. By virtue of training the generative model to best reproduce the training dataset, a semantic meaning may be attributed to features of the latent feature representation, e.g., in a generative model for generating images of traffic situations, particular features may indicate the presence of a traffic light and the colour it shows, weather conditions, etcetera.

Accordingly, the mask indicates perturbations of the latent space representation for the input instance. The latent space representation may be a latent space representation that, when used as input to the generative model, causes the generative model to generate a synthetic instance that approximates the input instance, e.g., in terms of visual appearance and/or distance according to a norm. The mask may disturb the classification of the input instance in the sense that, if the latent space representation is modified as indicated by the mask and the result is input to the generative model, this leads to a synthetic instance for which the classification is disturbed. This synthetic instance may be regarded as a perturbed input instance. For example, the synthetic instance may be classified differently than the original input instance, it may be classified the same but with less certainty, it may be close to the decision boundary of the classification model, etc.

The mask may indicate perturbations in various ways. For example, the mask may indicate perturbations to be applied to individual features of the latent space representation, e.g., a separate perturbation to be applied to each feature. The mask can for instance indicate additions or subtractions to numerical features; bit flips, sets, or resets to binary features, etc. For example, the mask may be a heatmap indicating bits of the latent space representation to set or reset. The mask can also indicate various other types of modifications, e.g., applying a non-linear function such as a threshold or a sigmoid to one or more features at the same time, etc. It is not necessary for the mask to be explicitly represented in memory, e.g., determining the mask may comprise determining a masked latent space representation based on the latent space representation of the input instance, the mask being implicitly defined as a difference between the original and masked latent space representations. The mask may also comprise successive perturbations, e.g., the mask may be determined in an iterative process as a sequence of constituent masks for progressively updating the latent space representation.

As the inventor realized, because the latent space representation is essentially a compressed representation of the input instance, also a mask of the latent space representation may allow to represent perturbations to the input instance relatively succinctly. Typically, perturbing a particular feature component of the latent space representation leads to changes in multiple feature components of the corresponding input instance. Moreover, such changes are typically related to each other and may represent higher-level features that affect a classification by the classification model. In many cases, particular feature components of the latent space representation may have a human-interpretable meaning, so in that sense, a mask to perturb them may provide an explanation of which features of the input instance were used by the classification model in its classification.

Hence, the various measures described involve may encompass learning how the latent space representation can be modified, e.g. how it can be grown or shrunk and in which directions, in order to let the classification model under diagnosis behave in a desired way. Thus, a structured approach may be provided to find minimal, intuitive, and/or critical perturbations of input instances that turn them into meaningful counterfactuals for the classification model. By determining the mask to disturb the classification, a mask may be obtained in a controlled way that provides semantic perturbations that change the model's opinion about the input instances. Such masks may be valuable, for example, because they retain their interpretability and allow an end user to better understand the model's decision boundary. For example, understanding the perturbations can help to understand of how sensible a model is to changes in its input, which may be desirable in model verification/validation. These sensibilities can be quantified and developed into standardized validation metrics.

Because a mask may be determined of the latent space representation instead of directly of the input instance, also susceptibility to adversarial-type modifications to the input instance may be decreased. As discussed, it is known for various classification models that an adversaries can determine minor, e.g., invisible, modifications to input instances that lead to a different classification. Such minor modifications are not typically useful as masks for explaining how the classification model arrived at a classification, since they typically represent artefacts of the classification model rather than meaningful changes. Determining a mask of an input instance directly may lead to a mask representing such adversarial changes. Various ways of mitigating this effect based on specific characteristics, e.g., high-frequency or low-intensity mask activations, may not sufficiently exclude adversarial changes and/or exclude meaningful masks.

By instead determining a mask that modifies the latent space representation, however, a mask may be determined that indicates more meaningful perturbations, e.g., perturbations that carry semantic meaning and/or lead to larger changes in the input instance that affect the classification by the classification model. In effect, prior knowledge of the input semantics may be incorporated. Since masks carry more meaning, they may be less likely to represent adversarial-type artefact, e.g., are more meaningful.

The determined mask may also be beneficially used as a metric indicating an amount of change that was required to transform the input instance to disturb of the classification. In other words, the determined mask may indicate an amount of "energy" needed to disturb the classification, and hence, indicates a degree of confidence in the classification of the classification model. In that sense, the mask may provide an explanation of the classification that is not only interpretable but also quantifiable, e.g., grounded in the model's behaviour.

Specifically, the mask is determined based on a classification score of the classification model for a perturbed input instance. Various classification models provide classifications score indicating a probability that the input instance belongs to a given class. Classification scores are also sometimes called prediction scores. The classification scores may be a probability score, but may also more generally indicate the probability, e.g., the higher the classification score, the higher the probability. For example, in the case of neural networks, such a classification score can comprise an output of a softmax output layer of the neural network. In the case of a multiclass classifier, separate classification scores may be provided for respective classes.

The perturbed instance is determined using the mask by masking the latent space representation with the mask and generating the perturbed input instance from the masked latent space representation using the generative model. In other words, starting with a fixed starting latent space representation, a type of latent space interpolation may be performed wherein a masked latent space representation is determined which leads to a classification score that indicates that the classification of the input instance is disturbed, e.g., changed or made more uncertain, and that may thus reveal some the properties of interest of the original classification model. For example, determining the mask based on the classification score may yield instances that region of input space for which the model does is not well behaved, e.g., has a noisy classification boundary and/or instances of a counter-class generated using the least amount of change to the input instance.

Determining the mask comprises optimizing the mask based on the classification score, by selecting a mask that minimizes a loss comprising the classification score. Such an optimization may be performed using known optimization methods, for example iterative methods such as stochastic gradient descent. It will be appreciated that the optimization may be heuristic and/or may arrive at a local optimum. The optimization does not have to be iterative, e.g., it may be performed by a brute-force search of the latent space, by selecting a mask with a minimal classification score form a random sample of the latent space, by determining the mask using a closed-form expression, etc. As also discussed, optimizing the mask may comprise optimizing the masked latent space representation, the mask being implicitly defined by the masked latent space representation. For example, the aforementioned optimization techniques may equivalently be applied to obtain the masked latent space representation.

Instead of or in addition to the mask or masked latent space representation, also the determined perturbed input instance for the mask may be beneficially provided as an output. For example, the perturbed input instance may show features that were relevant for the classification of the original input instance, e.g., especially when presented alongside the original input instance. Moreover, the classification model may be less certain in classifying the input instance, indicating a kind of instance that the classification model has difficulty with, so that adding training instances of this kind to the training dataset for the classification model may improve its performance.

Optionally, the processor subsystem is configured to determine the mask by minimizing at least a difference between the classification score and a classification threshold. For example, the mask may be determined by minimizing a loss function that comprises, or is at least increasing in, the difference. The loss function may comprise other terms, e.g., here and elsewhere, "minimizing at least" should be interpreted to mean that the optimization, other things equal, favours masks with a lower difference.

For example, the classification threshold may be a classification threshold for the class in which the original input instance is classified. Classification scores above the threshold may result in a classification into that class. Minimizing the difference may result in a mask for moving the input instance closer to the decision boundary of the classification model and/or a perturbed input instance close to the decision boundary, highlighting aspects of the latent space representation that the classification model used to arrive at its classification of the input instance.

Optionally, the processor subsystem is configured to determine the mask by maximizing at least a gradient of the classification score with respect to the mask. For example, similarly to the difference between the classification and the threshold, a loss function may comprise the gradient in such a way that, other things equal, higher gradients are favoured. For example, a norm of the gradient may be maximized. Using the gradient may focus the optimization on irregular parts of the latent feature space, e.g., parts close to the decision boundary and/or parts where the classification model exhibits non-uniform or unpredictable behaviour. Such parts may indicate types of training instances that the model finds particularly difficult to classify and/or may indicate modifications to the input instance that make the classification model particularly uncertain. Use of the gradient can be particularly useful for multiclass classification, in which case a change in perturbation score may be more informative than a particular classification score with respect to a particular class.

Optionally, the processor subsystem is configured to determine the mask by minimizing at least a discriminator score quantifying a dissimilarity between the perturbed input instance and a training dataset used to train the generative model. For example, as above, a loss function may comprise the discriminator score such that, other things equal, less dissimilarity is favoured. Including the discriminator score may encourage the optimization to exclude unnatural-looking solutions, thus providing more meaningful results. For example, if the generative part of a generative adversarial network (GAN) is used, the discriminator score may be given by the discriminative part of the GAN used to train the generative model with. In the case of variational auto-encoders or various other types of generative models, a suitable optimization target function may be used to determine the discriminative score, e.g., a reconstruction loss of training the generative model to produce instances representative of the training dataset.

Optionally, the processor subsystem is configured to determine the mask by minimizing at least a norm of the mask. For example, as above, a loss function may comprise the norm such that, other things equal, lower norms are favoured. Minimizing the norm may stimulate relatively small masks, e.g., leading to relatively small perturbations of the input instance. It may be desirable to determine masks that use the smallest amount of energy to produce the largest possible impact on the classification, so based on the norm, unnecessary activations of the mask may be penalized. The norm is preferably a $\ell_1$ norm because of its sparsity-inducing qualities, but this is not required.

Optionally, the generative model comprises a generative part of a generative adversarial network (GAN). A GAN typically comprises a generative part and a discriminative part. The generative part may be trained to generate instances from latent feature representations and the discriminative part may be trained to distinguish instances generated by the generative part from training instances. For example, the two parts may be trained repeatedly and alternatingly. This may lead to a generative part able to generate a broad range of input instances similar to the training instances, including instances that approximate the training instances themselves and variations of them. Hence the generative part may be suitable as a generative model for the techniques described herein.

Optionally, the generative model comprises a decoder part of an autoencoder, e.g., a variational auto-encoder (VAE). An autoencoder typically comprises an encoder and a decoder. The encoder may be trained to generate latent space representations from instances and the decoder may be trained to generate instances from latent space representations. Both may for example be trained in a joint optimization for their ability to reproduce the original instances. Autoencoders such as VAEs are particularly suitable since the encoder part may be used to determine synthetic instances approximating input instances, as described.

Optionally, the classification model may be an image classifier. The processor subsystem may be configured to obtain an input image as the input instance and to determine a perturbed input image as the perturbed input instance. Explainability of classifications is particularly salient for image classification since image classification tasks are typically relatively complex and as a consequence, relatively complex classification model such as convolutional neural networks and similar may be used. Moreover, for images, being able to visualize the perturbed instance image provides a particularly appealing and intuitive way for users to interpret the determined mask. It is noted that various kinds of sensor inputs may effectively be represented and processed as images, as disclosed, for example, for sounds data in Chris Donahue *et al.*, "Adversarial Audio Synthesis" (available at https://arxiv.org/abs/1802.04208).

Optionally, the determined mask and/or the perturbed input instance generated by the generative model based on the determined mask are output in a sensory perceptible manner to a user, e.g., shown on a display. For example, the perturbed input instance may be presented alongside the original input instance for comparison. The user can be an end user of the classification model, in which case the mask and/or perturbed input instance can serve as a justification of the decision of the classification model. For example, in medical image classification, the perturbed input instance may highlight portions of an image of an organ used to make a decision and/or the mask may highlight semantic features, e.g., regarding volume, colour, shape, etc., based on which the decision was taken. Similarly, the output may inform the user, e.g., a model designer or user, of what data close to a decision boundary can be collected to improve the model.

Optionally, the processor subsystem is configured to determine multiple masks for the latent space representation of the input instance and to determine a stability value indicative of a stability of the classification of the input instance by the classification model based on the multiple masks. Providing a stability value along with a classification is particularly relevant in control systems, e.g., on obtaining a classification with a low stability value, the system may ask for user confirmation, log the classification and outcomes associated with it, activate a safety subsystem, etcetera. The stability value may indicate an amount of energy that is generally needed to modify a classification of the input instance, wherein an energy measures an amount of information contained in the mask, e.g., as computed by a norm on the mask. More energy may indicate higher stability since more changes may be needed to disturb the classification. The norm may be the same norm that was also minimized when determining the mask.

Determining multiple masks, e.g., corresponding to moving in different directions to a decision boundary of the classification model, may result in obtaining a more accurate assessment of the stability, for example, the decision boundary may be close in one direction but far away in another direction. For example, the processor subsystem may be configured to determining a mask of the multiple masks by randomly generating an initial value for the mask and iteratively updating the mask based on the initial value, thus causing the optimization to move to the decision boundary in various directions.

Optionally, the processor subsystem is further configured to obtain a classification of the perturbed input instance. The processor subsystem may re-train the classification model using at least the perturbed input instance and the classification. As discussed, the mask may disturb the classification of the input instance e.g., the perturbed instance may lie on or close to a decision boundary of the classification model. A perturbed instance lying near the decision boundary may indicate that insufficient training instances similar to this perturbed instance were used to train the classification model. Using the perturbed instance and its classification to re-train the model may thus improve its accuracy. Optionally, multiple perturbed instances and respective classifications are determined based on the mask to further improve classification near the decision boundary. For example, random noise may be added to the masked latent space representation, and noisy perturbed instances may be generated from respective noisy masked latent space representations.

Optionally, the input interface is for further accessing a further classification model. The further classification model may be configured for determining classifications of masks for latent space representations, e.g., into two or more predefined classes. The processor subsystem may be further configured to determine a classification by the further classification model of the determined mask. The inventor realized that, since the latent space representation essentially provides a compressed representation of the input instance, the mask may be seen as providing information in compressed form on how the classification model determines its classification. In an embodiment, the classification model is for detecting anomalies, e.g., in a control system, and the further classification model is for classifying anomalies into multiple types. By providing information in a more compressed and/or semantically structed way, a particularly accurate further classifier may be obtained. Generally, the further classifier may classify the masks into multiple root causes for the classification by the original classification model.

It will be appreciated by those skilled in the art that two or more of the above-mentioned embodiments, implementations, and/or optional aspects of the invention may be combined in any way deemed useful.

Modifications and variations of any computer-implemented method and/or any computer readable medium, which correspond to the described modifications and variations of a corresponding system, can be carried out by a person skilled in the art on the basis of the present description.

## BRIEF DESCRIPTION OF THE DRAWINGS

These and other aspects of the invention will be apparent from and elucidated further with reference to the embodiments described by way of example in the following description and with reference to the accompanying drawings, in which

Fig. 1 shows a system for determining a perturbation mask;
Fig. 2 shows a detailed example of how a perturbation mask may be determined;
Fig. 3 shows a method of determining a perturbation mask;
Fig. 4 shows a computer-readable medium comprising data.

It should be noted that the figures are purely diagrammatic and not drawn to scale. In the figures, elements which correspond to elements already described may have the same reference numerals.

## DETAILED DESCRIPTION OF EMBODIMENTS

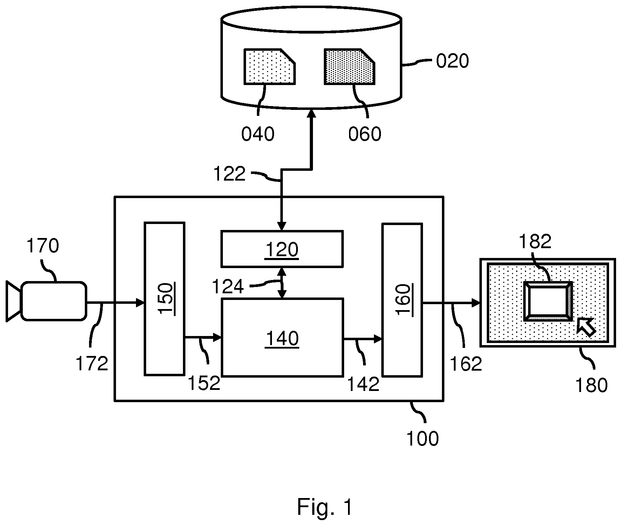

**Fig. 1** shows a system 100 for determining a perturbation mask. The perturbation mask may indicate, for an input instance to a classification model, perturbations that disturb a classification of the input instance by the classification model. The system 100 may comprise an input interface 120 and a processor subsystem 140 which may internally communicate via data communication 124.

The processor subsystem 140 may be configured to, during operation of the system 100 and using the input interface 120, access a classification model 040 and a generative model 060. Classification model 040 is configured for determining classifications of input instances of a certain type. The generative model 060 is configured for generating synthetic instances of that type from latent space representations. For example, as shown in Fig. 1, the data interface 120 may provide access 122 to an external data storage 020 which may comprise said models 040, 060. Alternatively, models 040, 060 may be accessed from an internal data storage which is part of the system 100. Alternatively, models 040, 060 may be received via a network from another entity. In general, the data interface 120 may take various forms, such as a network interface to a local or wide area network, e.g., the Internet, a storage interface to an internal or external data storage, etc. Data storage 020 may take any known and suitable form.

The processor subsystem 140 is further configured to, during operation of the system 100, obtain an input instance for classification model 040, a classification of the input instance according to classification model 040, and a latent space representation for the input instance. For example, processor subsystem 140 obtains the classification by classifying the input instance using classification model 040. For example, processor subsystem 140 determines the latent space representation based on the input instance, e.g., using an encoder part of a generative adversarial network. The latent space representation, when used as input to the generative model 060, causes the generative model to generate a synthetic instance that approximates the input instance, e.g., is close to the input instance in norm and/or in visual appearance. The processor subsystem 140 is further configured to, during operation of the system 100, determine a mask indicating perturbations that disturb a classification of the input instance by the classification model 040. The mask indicates perturbations to the latent space representation for the input instance. The mask is determined based on a classification score of the classification model 040 for a perturbed input instance. The perturbed instance is determined using the mask by masking the latent space representation with the mask and generating the perturbed input instance from the masked latent space representation using the generative model 060.

As an optional component, the system 100 may comprise an image input interface 150 or any other type of input interface for obtaining sensor data from a sensor, such as a camera 170. The sensor data may be comprised in the input instance. For example, the camera may be configured to capture image data 172, processor subsystem 140 being configured to obtain the input instance 152 from image data 172 obtained via input interface 150.

As an optional component, the system 100 may comprise a display output interface 160 or any other type of output interface for outputting the determined mask and/or the perturbed input instance to a rendering device, such as a display 180. For example, the display output interface 160 may generate display data 162 for the display 180 which causes the display 180 to render the determined mask and/or the perturbed instance 142 in a sensory perceptible manner, e.g., as an on-screen visualisation 182.

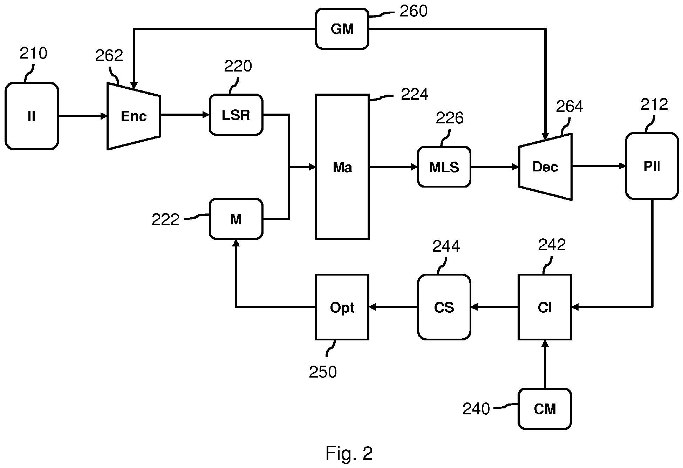

Various details and aspects of the operation of the system 100 will be further elucidated with reference to Fig. 2, including optional aspects thereof.

In general, the system 100 may be embodied as, or in, a single device or apparatus, such as a workstation, e.g., laptop or desktop-based, or a server. The device or apparatus may comprise one or more microprocessors which execute appropriate software. For example, the processor subsystem may be embodied by a single Central Processing Unit (CPU), but also by a combination or system of such CPUs and/or other types of processing units. The software may have been downloaded and/or stored in a corresponding memory, e.g., a volatile memory such as RAM or a non-volatile memory such as Flash. Alternatively, the functional units of the system, e.g., the data interface and the processor subsystem, may be implemented in the device or apparatus in the form of programmable logic, e.g., as a Field-Programmable Gate Array (FPGA). In general, each functional unit of the system may be implemented in the form of a circuit. It is noted that the system 100 may also be implemented in a distributed manner, e.g., involving different devices or apparatuses, such as distributed servers, e.g., in the form of cloud computing.

**Fig. 2** shows a detailed yet non-limiting example of how a mask may be determined for an input instance, for example, by the system 100 of Fig. 1.

Shown in the figure is a classification model **CM,** 240. The classification model **CM** is configured for determining classifications of input instances. Classification model **CM** may classify the data into one or more predefined classes, e.g. two (a binary classifier) or more than two (a multiclass classifier). For the sake of simplicity, the following description will focus on image data as input to an image classification model in a binary classification scenario.

Various known kinds classification models can be used, but for illustration purposes, in this example a neural network is used. Generally, a classification model may allow to determine a classification score, e.g., a probability score, indicating a probability that an input instance belongs to a given class, e.g., neural network **CM** may provide a softmax score. Shown in the figure is a classification operation **CI,** 242, using the classification model to determine a classification score of a perturbed input instance, as discussed in more detail later. Classification model **CM** may be trained based on a labelled training dataset in a training operation (not shown).

Shown also in the figure is an input instance **II,** 210, to classification model **CM**. Input instances representing sensor data may be represented as feature vectors, but this is not necessary, e.g., also graph-structured data may be used. Input instance **II** may be obtained in various ways, e.g., from or based on data of a sensor interface, from a user, from a different subsystem, etc. This figure illustrates determining a mask **M,** 222, indicating perturbations that disturb a classification of input instance **II** by classification model **CM**. In various embodiments, a classification of input instance **II** according to classification model **CM** is obtained (not shown), e.g., by using the classification model **CM** to classify the input instance **II,** by receiving the classification as an input, etc.

Shown also in the figure is a generative model **GM,** 260. The generative model **GM** is configured for generating, from latent space representations, synthetic instances of the same type that is input to the classification model **CM,** in other words, generative model **GM** outputs instances suitable as input to classification model **CM**. Latent space representations are typically smaller than the instances generated from them. As a concrete example, input instance **II** may be an image, e.g., of size 256x256, for which a latent space representation may consist of 100 features.

Generative models can often be decomposed into an encoder part and a decoder part, where the decoder part may generate synthetic instances from latent space representations and the encoder part may generate latent space representations from synthetic instances. The generative model may be trained in a training operation (not shown), e.g. on the same dataset that classification model **CM** is trained on, or on a similar dataset. When using the dataset to train the generative model, the dataset is typically unlabelled. Typically, the generative model is trained to minimize a loss function quantifying a loss of reproducing instances of the training dataset by the generative model.

Generative model **GM** may be a variational autoencoder (VAE). In the case of a VAE, the latent space may be modelled explicitly by choosing its latent distribution, e.g., as a normal distribution with a learned mean and standard deviation. The VAE may be parameterized by weights and biases of the encoder and decoder parts, the mean, and/or the standard deviation.

However, other types of generative models, e.g., generative adversarial network (GAN) and similar, are also possible. In the case of a GAN, the generator part may be trained alongside a discriminator network. The generator part may be trained to generate synthetic instances and the discriminator network may be trained to determine discriminator scores quantifying a dissimilarity between the generated instance and instances form the training dataset. Training may proceed until a Nash equilibrium is reached, such that the generator part may produce samples which a highly discriminative discriminator can no longer distinguish from actual samples from the training dataset. In this way, the generator may learn to model the input data distribution.

Shown also is an operation **Enc,** 262, in which a latent space representation **LSR,** 220, for input instance **II** is obtained by determining it from the input instance **II.** The latent space representation **LSR,** when used as input to the generative model **GM,** causes the generative model **GM** to generate a synthetic instance that approximates the input instance II, e.g., is close in norm and/or visual appearance. In this example, **Enc** may obtain latent space representation **LSR** by applying the encoder part of variational autoencoder **GM.** For other types of generative models, it is also known in the art to determine a latent space representation giving an approximation to an input instance, e.g., determining the latent space representation may be phrased as an optimization problem that can be solved using known techniques. This is disclosed, for example, for image GANs in Zachary C. Lipton and Subarna Tripathi, "Precise Recovery of Latent Vectors from Generative Adversarial Networks" (available at https://arxiv.org/abs/1702.04782

Given trained generative model **GM,** shown in this figure is an optimization procedure to learn mask **M** for perturbing input instance **II** to disturb a classification of the input instance by classification model **CM,** e.g., in search of a decision boundary of the classification model. The decision boundary may be "critical" in the sense that a non-smooth and/or overfitted decision boundary may be found where the model's predictions are non-uniform and/or unpredictable, and therefore less trustworthy.

Mask **M** may indicate perturbations to latent space representation **LSR.** Mask **M** may have the same shape and size as latent space representation **LSR** and values in a range [-*max, max*], where *max* is a user-specified parameter and represents a size of the search space.

Mask **M** may be determined based on a classification score CS for a perturbed input instance **PII,** 212 perturbed as indicated by mask **M.**

To determine perturbed input instance **PII,** in an operation **Ma,** 224, latent space representation **LSR** may be masked with mask **M.** For example, operation **Ma** may apply to latent space representation **LSR** the perturbations indicated by mask **M.** Operation **Ma** may result in masked latent space representation **MLS,** 226. Denoting the latent space representation **LSR** by a vector $z$ and the mask **M** by vector $m$, the result may be denoted $\phi(z, m)$. A wide set of possible functions can be used, e.g., in this example, operation **Ma** may perform an elementwise addition $z + m$.

In an operation **Dec,** 264, perturbed input instance **PII** may be generated from masked latent space representation **MLS** using the generative model $G$, **GM,** e.g., resulting in $G(\phi(z, m))$. For example, the decoder part of a variational autoencoder, may be applied, or the generative part of a GAN, etc.

In an operation **CI,** 242, classification model **CM** may be applied to perturbed input instance **PII** to obtain a classification score **CS,** 244, indicating a probability of the perturbed input instance **PII** belonging to class $c$ of the input instance **II.** For example, class $c$ may be obtained by applying classification model **CM.** For example, classification score **CS** may be a softmax output $f_c$ of classification model **CM** to diagnose for class c, resulting in $f_c(G(\phi(z, m)))$.

In this example, mask **M** is determined based on classification score **CS** in an optimization operation **Opt**, 250, that minimizes a loss function $\mathcal{L}$ based on the classification score. In the example shown here, the optimization is an iterative optimization, e.g., mask **M** may be initialized, e.g. randomly, and then progressively updated based on classification score **CS,** e.g., using stochastic gradient descent or similar. However, this is not necessary, e.g., brute-force search or a closed-form solution to the optimization may also be used.

As a concrete example, the following loss function may be used that combines various terms that each contribute to mask $m$ providing a perturbation that disturbs the classification of input instance **II:**

$$\mathcal{L} = \left[ f_c\left( G\left( \phi(z, m) \right) \right) - f_{c_T} \right] + D\left( G\left( \phi(z, m) \right) \right) - \lambda_1 \nabla f_c\left( G\left( \phi(z, m) \right) \right) + \lambda_2 \|m\|_1 \quad (*)$$

It will be understood that variations are possible, e.g., a subset of the above terms may be used, additional terms may be included, various terms may be controlled by hyperparameters, etc.

As exemplified by the first term of loss function $\mathcal{L}$ above, the mask may be optimized to minimize a difference between classification score $f_c(G(\phi(z, m)))$ and a classification threshold $f_{c_T}$. For example, for neural network **CM,** classification threshold $f_{c_T}$ may represent a target softmax output of the classification model to diagnose for class c of the input instance **II.** For instance, in binary classification, $f_{c_T}$ may be set to a classification threshold determined previously based on a ROC curve or set in another way to represent the softmax boundary that divides samples of one class from another. Including a difference term in the optimization may help to assures that a mask **M** is learned that influences the latent space representation **LSR** of the input instance to arrive at a perturbed instance **PII** which is close the model's decision boundary.

As exemplified by the second term of loss function $\mathcal{L}$ above, the mask may be further optimized to minimize a discriminator score, e.g., $D(G(\phi(z, m)))$, quantifying a dissimilarity between the perturbed input instance $\phi(z, m)$ and a training dataset used to train the generative model **GM**. For example, if generative model **GM** is a GAN, the discriminator part of the GAN may be used to obtain a discriminator score, e.g., trained to return 1 if the input is a generated example, and 0 if the input is real. For other types of generative model, this term may be omitted or replaced by another appropriate discriminator term. Including a discriminator score may help to ensure that perturbed input instance **PII** retains semantic qualities of the input instance **II.** As a consequence, excluding unnatural-looking solutions may be encouraged.

As exemplified by the third term of loss function $\mathcal{L}$ above, the mask may be further optimized to maximizing a gradient, e.g., $\nabla f_c(G(\phi(z, m)))$, of the classification score $G(\phi(z, m))$, e.g., the softmax output, with respect to the mask. Including the gradient may effectively places a constraint on how the classification model **CM** reacts at the decision boundary of the class of input instance **II.** By including the gradient, masks may be favoured to obtain perturbed input instances **II** for which the model behaves non-uniformly and/or unpredictably. To control this effect, for example, a hyperparameter $\lambda_1$ may be applied to the classification score. In terms of the learning history of the optimization process, including the gradient may favour solutions that have a noisy and/or high-frequency softmax curve.

As exemplified finally by the fourth term of loss function $\mathcal{L}$ above, the mask may be further optimized to minimize a norm, e.g., $\|m\|_1$, of the mask. Minimizing the norm may constrain an amount of modification made to latent space representation **LSR.** It may be desirable to find a mask with relatively little modification, e.g., a smallest amount of energy with a largest possible impact. In the example the $\ell_1$ norm was chosen for minimizing a number of modifications, e.g., favouring sparse masks, but other norms are possible as well. As shown, a hyperparameter $\lambda_2$ may be used to control the effect of including the norm.

Through the various measures described above, a perturbed input instance **PII** and/or a mask **M** indicating its perturbations may be determined. Both may be beneficially used in various ways. In some embodiments, the determined mask **M** and/or the perturbed input instance **PII** may be output in a sensory perceptible manner to a user, providing insight to the user concerning the way the classification model **CM** has classified input instance **II.** For example, mask **M** and/or perturbed instance **PII** may be used by model developers for model validation and/or debugging, e.g., to gain insights into stability of model predictions and gain an understanding of the model's general behaviour, or by users to understand how a particular classification was made.

In some embodiments, multiple masks **M** are determined for latent space representation **LSR** of the input instance. Based on the multiple masks **M,** a stability value may be determined (not shown) indicative of a stability of the classification of the input instance II by the classification model **CM.** The stability value may be based on energy values, e.g., norms, of the masks as described below. Effectively, this may allow to some extent to automate the model validation discussed above.

In more detail, a mask **M** of the multiple masks may be determined by randomly generating an initial value for the mask and iteratively updating the mask based on the initial value, e.g., using operations **Ma, Dec, Cl,** and/or **Opt** discussed above. Effectively, this provides a Monte Carlo-like assessment of the remaining mask energy after the optimization process over several iterations of the procedure detailed above. The initial mask may be generated randomly with a known expected energy, e.g., by sampling from a normal distribution $\mathcal{N}(0, \sigma^2)$ with a fixed standard deviation. This way, optimization **Opt** may be encouraged to explore different regions of the solution space. Parameters of the noise model, e.g., $\sigma$, may also be based at least in part based on previous iterations of the mask generation procedure, for example, larger initial values may be used if slow convergence to a mask is determined.

Upon successfully completing the optimization to determine a mask **M,** the energy of mask **M** may be stored. The energy may be determined based on a $\ell_1$ norm, a $\ell_2$ norm, an entropy, etcetera. The associated perturbed input instances **PII** may also be stored.

Based on determined mask and respective energies, one or more stability values may be determined. Generally, higher energy values are indicative of a higher stability of the classification of the input instance **II.** For instance, high mask energies may correspond to significant changes made on the input instance. Therefore, a model for which only such high energy changes change its decision may be considered more stable than one for which already small energies can cause differences in the classification by the model. Accordingly, the stability value may be based, e.g., on an average energy, a confidence interval of the energy, etc. For example, a warning may be issued of the stability value indicates a low stability of the classification, e.g., is below a certain threshold.

Apart from the determined stability values, also, the generated perturbed input instances **PII** may be beneficially output, e.g., to serve as visual validation of representative variations of the data in the dataset and/or to augment the dataset or otherwise improve the classification model **CM,** as also discussed below.

In various embodiments, a classification may be obtained of perturbed input instance **PII,** and classification model **CM** may be re-trained in a re-training operation (not shown) using at least the perturbed input instance **PII** and the obtained classification. For example, the perturbed input instance may be added to the original training dataset after which the training procedure used to train classification model **CM** may be repeated, or classification model **CM** may be updated based on one or more perturbed input instances **PII** and their classifications. Since perturbed input images **PII** may be determined in such a way that classification model **CM** finds it difficult to classify them, using them as training data may result in particularly efficient and/or cost-effective refinement of the model. Also generative model **GM** may be re-trained based on the perturbed input instance.

In various embodiments, a further classification model may be used, in a further classification operation (not shown), to determine a classification of the determined mask **M,** e.g., to find a root cause for the classification by classification model **CM.** Since determined mask **M** may essentially provide an explanation of the classification by model **CM** in compressed form, such a further classification may be particular effective.

For example, in various embodiments, the classification of determined mask **M** may be used as a control signal of a control system. For example, classification model **CM** may be trained to detect defects in manufactured products as part of a quality inspection component in a manufacturing process. For example, classification model **CM** may classify input instances, e.g., images, into "OK" and "not OK" classes. The further classification model may then use the mask **M** to determine a root cause of "not OK" classifications, e.g., various anomalies, failures, and the like. For example, the model may distinguish between physical defects in a sample, changes in control conditions such as lighting during the manufacturing process, etc. Based on the classification, e.g., into explanations/anomalies, a control signal may be determined, e.g., an operating parameter of the manufacturing process may be adjusted and/or the system may be brought in a safe mode based on the classification of the mask **M.** Thereby, insight into the classification of the input instance **II** as embodied in the mask **M** may be used to improve the quality of control signals provided by the control system.

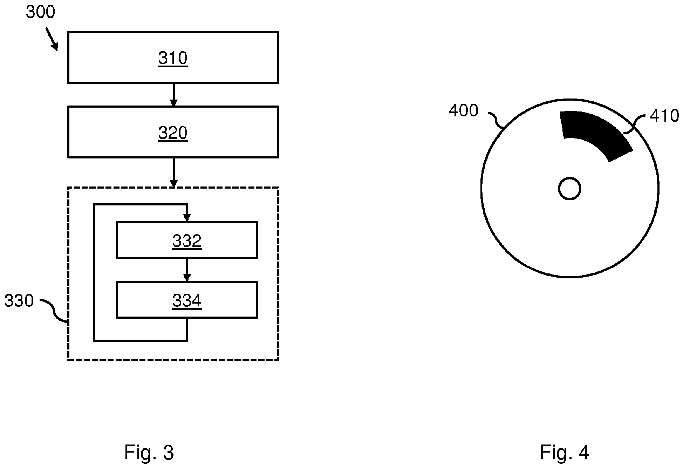

**Fig. 3** shows a block-diagram of computer-implemented method 300 of determining, for an input instance to a classification model, a mask indicating perturbations that disturb a classification of the input instance by the classification model. The method 300 may correspond to an operation of the system 100 of Fig. 1. However, this is not a limitation, in that the method 300 may also be performed using another system, apparatus or device.

The method comprises in an operation titled "ACCESSING CLASSIFICATION MODEL AND GENERATIVE MODEL", accessing 310 a classification model and a generative model. The classification model is configured for determining classifications of input instances. The input instances have a type. The generative model is configured for generating synthetic instances of the type from latent space representations. The method further comprises in an operation titled "OBTAINING INPUT INSTANCE, CLASSIFICATION, LATENT SPACE REPRESENTATION", obtaining 320 an input instance for the classification model, a classification of the input instance according to the classification model, and a latent space representation for the input instance. The latent space representation, when used as input to the generative model, causes the generative model to generate a synthetic instance that approximates the input instance. The method also comprises in an operation titled "DETERMINING MASK", determining 330 a mask indicating perturbations that disturb the classification of the input instance by the classification model. The mask indicates perturbations to the latent space representation for the input instance. The mask is determined based on a classification score of the classification model for a perturbed input instance. As part of operation 330, the perturbed instance is determined using the mask by, in an operation titled "MASKING LATENT SPACE REPRESENTATION", masking 332 the latent space representation with the mask.

As part of operation 330, to determine the perturbed instance, in an operation titled "GENERATING PERTURBED INPUT INSTANCE", the perturbed input instance is further generated 334 from the masked latent space representation using the generative model.

It will be appreciated that, in general, the operations of method 300 of Fig. 3 may be performed in any suitable order, e.g., consecutively, simultaneously, or a combination thereof, subject to, where applicable, a particular order being necessitated, e.g., by input/output relations.

The method(s) may be implemented on a computer as a computer implemented method, as dedicated hardware, or as a combination of both. As also illustrated in **Fig. 4,** instructions for the computer, e.g., executable code, may be stored on a computer readable medium 400, e.g., in the form of a series 410 of machine-readable physical marks and/or as a series of elements having different electrical, e.g., magnetic, or optical properties or values. The executable code may be stored in a transitory or non-transitory manner. Examples of computer readable mediums include memory devices, optical storage devices, integrated circuits, servers, online software, etc. Fig. 4 shows an optical disc 400.

Examples, embodiments or optional features, whether indicated as non-limiting or not, are not to be understood as limiting the invention as claimed.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or stages other than those stated in a claim. The article "a" or "an" preceding an element does not exclude the presence of a plurality of such elements. Expressions such as "at least one of" when preceding a list or group of elements represent a selection of all or of any subset of elements from the list or group. For example, the expression, "at least one of A, B, and C" should be understood as including only A, only B, only C, both A and B, both A and C, both B and C, or all of A, B, and C. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A system (100) for determining, for an input instance to a classification model, a mask indicating perturbations that disturb a classification of the input instance by the classification model, said disturbing changing the classification or making the classification less certain, the system comprising:

   - an input interface (120) for accessing a classification model (040) and a generative model (060), wherein the classification model is configured for determining classifications of input instances, the input instances having a type, and wherein the generative model is configured for generating synthetic instances of the type from latent space representations,
   - a processor subsystem (140) configured to:
   - obtain an input instance for the classification model, a classification of the input instance according to the classification model, and a latent space representation for the input instance, wherein the latent space representation, when used as input to the generative model, causes the generative model to generate a synthetic instance that approximates the input instance;
   - determine a mask indicating perturbations that disturb the classification of the input instance by the classification model, wherein the mask indicates perturbations to the latent space representation for the input instance, and wherein the mask is selected to minimize a loss comprising a classification score of the classification model for a perturbed input instance, the perturbed instance being determined using the mask by:
   - masking the latent space representation with the mask; and
   - generating the perturbed input instance from the masked latent space representation using the generative model.

2. The system (100) according to claim 1, wherein the processor subsystem (140) is configured to determine the mask by minimizing at least a difference between the classification score and a classification threshold.

3. The system (100) according to claim 1 or 2, wherein the processor subsystem (140) is configured to determine the mask by maximizing at least a gradient of the classification score with respect to the mask.

4. The system (100) according to any one of the preceding claims, wherein the processor subsystem (140) is configured to determine the mask by minimizing at least a discriminator score quantifying a dissimilarity between the perturbed input instance and a training dataset used to train the generative model.

5. The system (100) according to any one of the preceding claims, wherein the processor subsystem (140) is configured to determine the mask by minimizing at least a norm of the mask.

6. The system (100) according to any one of the preceding claims, wherein the generative model comprises a generative part of a generative adversarial network or a decoder part of an autoencoder.

7. The system (100) according to any one of the preceding claims, wherein the classification model is an image classifier, and wherein the processor subsystem (140) is configured to obtain an input image as the input instance and to determine a perturbed input image as the perturbed input instance.

8. The system (100) according to any one of the preceding claims, further comprising an output interface (160) for outputting the determined mask and/or the perturbed input instance in a sensory perceptible manner to a user.

9. The system (100) according to any one of the preceding claims, wherein the processor subsystem (140) is configured to determine multiple masks for the latent space representation of the input instance and to determine a stability value indicative of a stability of the classification of the input instance by the classification model based on the multiple masks.

10. The system (100) according to claim 9, wherein the processor subsystem (140) is configured to determining a mask of the multiple masks by randomly generating an initial value for the mask and iteratively updating the mask based on the initial value.

11. The system (100) according to claim 9 or 10, wherein the processor subsystem (140) is configured to determine the stability value by computing a norm of a mask of the multiple masks and computing the stability value from the norm.

12. The system (100) according to any one of the preceding claims, wherein the processor subsystem (140) is further configured to obtain a classification of the perturbed input instance, and to re-train the classification model using at least the perturbed input instance and the classification.

13. The system (100) according to any one of the preceding claims, wherein the input interface (120) is for further accessing a further classification model, wherein the further classification model is configured for determining classifications of masks for latent space representations, and wherein the processor subsystem (140) is further configured to determine a classification by the further classification model of the determined mask.

14. A computer-implemented method (300) of determining, for an input instance to a classification model, a mask indicating perturbations that disturb a classification of the input instance by the classification model, said disturbing changing the classification or making the classification less certain, the method comprising:

- accessing (310) a classification model and a generative model, wherein the classification model is configured for determining classifications of input instances, the input instances having a type, and wherein the generative model is configured for generating synthetic instances of the type from latent space representations,
- obtaining (320) an input instance for the classification model, a classification of the input instance according to the classification model, and a latent space representation for the input instance, wherein the latent space representation, when used as input to the generative model, causes the generative model to generate a synthetic instance that approximates the input instance;
- determining (330) a mask indicating perturbations that disturb the classification of the input instance by the classification model, wherein the mask indicates perturbations to the latent space representation for the input instance, wherein the mask is selected to minimize a loss comprising a classification score of the classification model for a perturbed input instance, the perturbed instance being determined using the mask by:
- masking (332) the latent space representation with the mask; and
- generating (334) the perturbed input instance from the masked latent space representation using the generative model.

15. A computer-readable medium (400) comprising transitory or non-transitory data representing instructions arranged to cause a processor system to perform the computer-implemented method according to claim 14.

**Patentansprüche**

1. System (100) zum Bestimmen, für eine Eingabeinstanz in ein Klassifizierungsmodell, einer Maske, die Störungen angibt, die eine Klassifizierung der Eingabeinstanz durch das Klassifizierungsmodell stören, wobei das Stören die Klassifizierung ändert oder die Klassifizierung weniger sicher macht, das System umfassend:

- eine Eingabeschnittstelle (120) zum Zugreifen auf ein Klassifizierungsmodell (040) und ein generatives Modell (060), wobei das Klassifizierungsmodell zum Bestimmen von Klassifizierungen von Eingabeinstanzen konfiguriert ist, wobei die Eingabeinstanzen einen Typ aufweisen und wobei das generative Modell zum Erzeugen synthetischer Instanzen des Typs aus Darstellungen eines latenten Raums konfiguriert ist,
- ein Prozessoruntersystem (140), das konfiguriert ist zum:

- Erhalten einer Eingabeinstanz für das Klassifizierungsmodell, einer Klassifizierung der Eingabeinstanz gemäß dem Klassifizierungsmodell und einer Darstellung eines latenten Raums für die Eingabeinstanz, wobei die Darstellung eines latenten Raums, bei Verwendung als Eingabe in das generative Modell, das generative Modell zum Erzeugen einer synthetischen Instanz, die sich der Eingabeinstanz annähert, veranlasst;

- Bestimmen einer Maske, die Störungen angibt, die die Klassifizierung der Eingabeinstanz durch das Klassifizierungsmodell stören, wobei die Maske Störungen der Darstellung eines latenten Raums für die Eingabeinstanz angibt und wobei die Maske zum Minimieren eines Verlusts, umfassend eine Klassifizierungsbewertung des Klassifizierungsmodells für eine gestörte Eingabeinstanz, ausgewählt ist, wobei die gestörte Instanz unter Verwendung der Maske bestimmt wird durch:

- Maskieren der Darstellung eines latenten Raums mit der Maske und
- Erzeugen der gestörten Eingabeinstanz aus der maskierten Darstellung eines latenten Raums unter Verwendung des generativen Modells.

**2.** System (100) nach Anspruch 1, wobei das Prozessoruntersystem (140) zum Bestimmen der Maske durch Minimieren mindestens einer Differenz zwischen der Klassifizierungsbewertung und einer Klassifizierungsschwelle konfiguriert ist.

**3.** System (100) nach Anspruch 1 oder 2, wobei das Prozessoruntersystem (140) zum Bestimmen der Maske durch Maximieren mindestens eines Gradienten der Klassifizierungsbewertung in Bezug auf die Maske konfiguriert ist.

**4.** System (100) nach einem der vorhergehenden Ansprüche, wobei das Prozessoruntersystem (140) zum Bestimmen der Maske durch Minimieren mindestens einer Diskriminatorbewertung, die eine Unähnlichkeit zwischen der gestörten Eingabeinstanz und einem Trainingsdatensatz, der zum Trainieren des generativen Modells verwendet wird, quantifiziert, konfiguriert ist.

**5.** System (100) nach einem der vorhergehenden Ansprüche, wobei das Prozessoruntersystem (140) zum Bestimmen der Maske durch Minimieren mindestens einer Norm der Maske konfiguriert ist.

**6.** System (100) nach einem der vorhergehenden Ansprüche, wobei das generative Modell einen generativen Teil eines generativen Adversarial-Netzes oder einen Decoderteil eines Autoencoders umfasst.

**7.** System (100) nach einem der vorhergehenden Ansprüche, wobei das Klassifizierungsmodell ein Bildklassifikator ist und wobei das Prozessoruntersystem (140) zum Erhalten eines Eingabebilds als die Eingabeinstanz und zum Bestimmen eines gestörten Eingabebilds als die gestörte Eingabeinstanz konfiguriert ist.

**8.** System (100) nach einem der vorhergehenden Ansprüche, ferner umfassend eine Ausgabeschnittstelle (160) zum Ausgeben der bestimmten Maske und/oder der gestörten Eingabeinstanz auf eine sensorisch wahrnehmbare Weise an einen Benutzer.

**9.** System (100) nach einem der vorhergehenden Ansprüche, wobei das Prozessoruntersystem (140) zum Bestimmen mehrerer Masken zur Darstellung eines latenten Raums der Eingabeinstanz und zum Bestimmen eines Stabilitätswerts, der eine Stabilität der Klassifizierung der Eingabeinstanz durch das Klassifizierungsmodell basierend auf den mehreren Masken angibt, konfiguriert ist.

**10.** System (100) nach Anspruch 9, wobei das Prozessoruntersystem (140) zum Bestimmen einer Maske der mehreren Masken durch zufälliges Erzeugen eines Anfangswerts für die Maske und iteratives Aktualisieren der Maske basierend auf dem Anfangswert konfiguriert ist.

**11.** System (100) nach Anspruch 9 oder 10, wobei das Prozessoruntersystem (140) zum Bestimmen des Stabilitätswerts durch Berechnen einer Norm einer Maske der mehreren Masken und Berechnen des Stabilitätswerts aus der Norm konfiguriert ist.

**12.** System (100) nach einem der vorhergehenden Ansprüche, wobei das Prozessoruntersystem (140) ferner zum Erhalten einer Klassifizierung der gestörten Eingabeinstanz und zum erneuten Trainieren des Klassifizierungsmodells unter Verwendung mindestens der gestörten Eingabeinstanz und der Klassifizierung konfiguriert ist.

**13.** System (100) nach einem der vorhergehenden Ansprüche, wobei die Eingabeschnittstelle (120) zum weiteren Zugreifen auf ein weiteres Klassifizierungsmodell vorgesehen ist, wobei das weitere Klassifizierungsmodell zum Bestimmen von Klassifizierungen von Masken für Darstellungen eines latenten Raums konfiguriert ist und wobei das Prozessoruntersystem (140) ferner zum Bestimmen einer Klassifizierung durch das weitere Klassifizierungsmodell der bestimmten Maske konfiguriert ist.

14. Computerimplementiertes Verfahren (300) zum Bestimmen, für eine Eingabeinstanz in ein Klassifizierungsmodell, einer Maske, die Störungen angibt, die eine Klassifizierung der Eingabeinstanz durch das Klassifizierungsmodell stören, wobei das Stören die Klassifizierung ändert oder die Klassifizierung weniger sicher macht, das Verfahren umfassend:

- Zugreifen (310) auf ein Klassifizierungsmodell und ein generatives Modell, wobei das Klassifizierungsmodell zum Bestimmen von Klassifizierungen von Eingabeinstanzen konfiguriert ist, wobei die Eingabeinstanzen einen Typ aufweisen und wobei das generative Modell zum Erzeugen synthetischer Instanzen des Typs aus Darstellungen eines latenten Raums konfiguriert ist,
- Erhalten (320) einer Eingabeinstanz für das Klassifizierungsmodell, einer Klassifizierung der Eingabeinstanz gemäß dem Klassifizierungsmodell und einer Darstellung eines latenten Raums für die Eingabeinstanz, wobei die Darstellung eines latenten Raums, bei Verwendung als Eingabe in das generative Modell, das generative Modell zum Erzeugen einer synthetischen Instanz, die sich der Eingabeinstanz annähert, veranlasst;
- Bestimmen (330) einer Maske, die Störungen angibt, die die Klassifizierung der Eingabeinstanz durch das Klassifizierungsmodell stören, wobei die Maske Störungen der Darstellung eines latenten Raums für die Eingabeinstanz angibt, wobei die Maske zum Minimieren eines Verlusts, umfassend eine Klassifizierungsbewertung des Klassifizierungsmodells für eine gestörte Eingabeinstanz, ausgewählt ist, wobei die gestörte Instanz unter Verwendung der Maske bestimmt wird durch:

- Maskieren (332) der Darstellung eines latenten Raums mit der Maske und
- Erzeugen (334) der gestörten Eingabeinstanz aus der maskierten Darstellung eines latenten Raums unter Verwendung des generativen Modells.

15. Computerlesbares Medium (400), umfassend transitorische oder nicht transitorische Daten, die Anweisungen darstellen, die angeordnet sind, um ein Prozessorsystem zum Durchführen des computerimplementierten Verfahrens nach Anspruch 14 zu veranlassen.

**Revendications**

1. Système (100) permettant de déterminer, pour une instance d'entrée dans un modèle de classification, un masque indiquant les perturbations qui perturbent une classification de l'instance d'entrée par le modèle de classification, ladite perturbation modifiant la classification ou rendant la classification moins certaine, le système comprenant :

- une interface d'entrée (120) pour accéder à un modèle de classification (040) et à un modèle génératif (060), dans lequel le modèle de classification est configuré pour déterminer les classifications des instances d'entrée, les instances d'entrée ayant un type, et dans lequel le modèle génératif est configuré pour générer des instances synthétiques du type à partir de représentations de l'espace latent,
- un sous-système processeur (140) configuré pour :

- obtenir une instance d'entrée pour le modèle de classification, une classification de l'instance d'entrée selon le modèle de classification, et une représentation de l'espace latent pour l'instance d'entrée, la représentation de l'espace latent, lorsqu'elle est utilisée comme entrée dans le modèle génératif, amenant le modèle génératif à générer une instance synthétique qui approxime l'instance d'entrée ;
- déterminer un masque indiquant les perturbations qui perturbent la classification de l'instance d'entrée par le modèle de classification, le masque indiquant les perturbations à la représentation de l'espace latent pour l'instance d'entrée, et le masque étant sélectionné pour minimiser une perte comprenant un score de classification du modèle de classification pour une instance d'entrée perturbée, l'instance perturbée étant déterminée à l'aide du masque :

- en masquant la représentation de l'espace latent avec le masque ; et
- en générant l'instance d'entrée perturbée à partir de la représentation de l'espace latent masqué à l'aide du modèle génératif.

**2.** Système (100) selon la revendication 1, dans lequel le sous-système processeur (140) est configuré pour déterminer le masque en minimisant au moins une différence entre le score de classification et un seuil de classification.

**3.** Système (100) selon la revendication 1 ou la revendication 2, dans lequel le sous-système processeur (140) est configuré pour déterminer le masque en maximisant au moins un gradient du score de classification par rapport au masque.

**4.** Système (100) selon l'une quelconque des revendications précédentes, dans lequel le sous-système processeur (140) est configuré pour déterminer le masque en minimisant au moins un score de discriminateur quantifiant une dissimilarité entre l'instance d'entrée perturbée et un ensemble de données d'entraînement utilisé pour entraîner le modèle génératif.

**5.** Le système (100) selon l'une quelconque des revendications précédentes, dans lequel le sous-système processeur (140) est configuré pour déterminer le masque en minimisant au moins une norme du masque.

**6.** Système (100) selon l'une quelconque des revendications précédentes, dans lequel le modèle génératif comprend une partie générative d'un réseau antagoniste génératif ou une partie décodeur d'un autoencodeur.

**7.** Système (100) selon l'une quelconque des revendications précédentes, dans lequel le modèle de classification est un classificateur d'images, et dans lequel le sous-système processeur (140) est configuré pour obtenir une image d'entrée en tant qu'instance d'entrée et pour déterminer une image d'entrée perturbée en tant qu'instance d'entrée perturbée.

**8.** Système (100) selon l'une quelconque des revendications précédentes, comprenant en outre une interface de sortie (160) pour délivrer en sortie le masque déterminé et/ou l'instance d'entrée perturbée d'une manière sensoriellement perceptible par un utilisateur.

**9.** Système (100) selon l'une quelconque des revendications précédentes, dans lequel le sous-système processeur (140) est configuré pour déterminer plusieurs masques pour la représentation de l'espace latent de l'instance d'entrée et pour déterminer une valeur de stabilité indicative d'une stabilité de la classification de l'instance d'entrée par le modèle de classification basé sur les multiples masques.

**10.** Système (100) selon la revendication 9, dans lequel le sous-système processeur (140) est configuré pour déterminer un masque des multiples masques en générant aléatoirement une valeur initiale pour le masque et en mettant à jour de manière itérative le masque sur la base de la valeur initiale.

**11.** Système (100) selon la revendication 9 ou la revendication 10, dans lequel le sous-système processeur (140) est configuré pour déterminer la valeur de stabilité en calculant une norme d'un masque des multiples masques et en calculant la valeur de stabilité à partir de la norme.

**12.** Système (100) selon l'une quelconque des revendications précédentes, dans lequel le sous-système processeur (140) est en outre configuré pour obtenir une classification de l'instance d'entrée perturbée, et pour entraîner à nouveau le modèle de classification en utilisant au moins l'instance d'entrée perturbée et la classification.

**13.** Système (100) selon l'une quelconque des revendications précédentes, dans lequel l'interface d'entrée (120) est destinée à accéder en outre à un modèle de classification supplémentaire, dans lequel le modèle de classification supplémentaire est configuré pour déterminer des classifications de masques pour des représentations d'espace latent, et dans lequel le sous-système processeur (140) est en outre configuré pour déterminer une classification par le modèle de classification supplémentaire du masque déterminé.

**14.** Procédé (300) mis en œuvre par ordinateur comprenant de déterminer, pour une instance d'entrée dans un modèle de classification, un masque indiquant les perturbations qui perturbent une classification de l'instance d'entrée par le modèle de classification, ladite perturbation modifiant la classification ou rendant la classification moins certaine, le procédé comprenant les étapes suivantes :

- accéder (310) à un modèle de classification et à un modèle génératif, dans lequel le modèle de classification est configuré pour déterminer les classifications des instances d'entrée, les instances d'entrée ayant un type, et dans lequel le modèle génératif est configuré pour générer des instances synthétiques du type à partir de représentations de l'espace latent,

- obtenir (320) une instance d'entrée pour le modèle de classification, une classification de l'instance d'entrée selon le modèle de classification, et une représentation de l'espace latent pour l'instance d'entrée, la représentation de l'espace latent, lorsqu'elle est utilisée comme entrée dans le modèle génératif, amenant le modèle génératif à générer une instance synthétique qui approxime l'instance d'entrée ;

- déterminer (330) un masque indiquant les perturbations qui perturbent la classification de l'instance d'entrée par le modèle de classification, le masque indiquant les perturbations à la représentation de l'espace latent pour l'instance d'entrée, le masque étant sélectionné pour minimiser une perte comprenant un score de classification du modèle de classification pour une instance d'entrée perturbée, l'instance perturbée étant déterminée à l'aide du masque :

- en masquant (332) la représentation de l'espace latent avec le masque ; et
- en générant (334) l'instance d'entrée perturbée à partir de la représentation de l'espace latent masqué à l'aide du modèle génératif.

15. Support lisible par ordinateur (400) comprenant des données transitoires ou non transitoires représentant des instructions agencées pour amener un système processeur à exécuter le procédé mis en œuvre par ordinateur selon la revendication 14.

Fig. 1

Fig. 2

300

310

320

330

332

334

Fig. 3

400

410

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019067960 A1

**Non-patent literature cited in the description**

- **ZACHARY C. LIPTON ; SUBARNA TRIPATHI.** *Precise Recovery of Latent Vectors from Generative Adversarial Networks, https://arxiv.org/abs/1702.04782*